# EUROPEAN PATENT APPLICATION

(11) **EP 3 569 412 A1**
(43) Date of publication of application: **20.11.2019**
(21) Application number: 18175314.6
(22) Date of filing: 31.05.2018
(51) Int. Cl.: B32B 27/12, B32B 5/02, B32B 27/20, B32B 27/40, B32B 37/00

(54) **STRATIFIED COMPOSITE MATERIAL WITH POLYURETHANE LAYER AND PROCESS FOR OBTAINING IT**

(30) Priority: 11.05.2018 IT 201800005291
(71) Applicant: Lorenzi S.r.l., 35010 Vigonza (PD) (IT)
(72) Inventor: LORENZI, Lorenzo, 35010 VIGONZA (PD) (IT)
(74) Representative: Morabito, Sara

(57) **Abstract**

The invention is a new stratified composite material specifically suited to be used to make shoe uppers, outdoor furnishings, objects for the automotive sector and saddles for motorbikes and bikes, comprising at least two layers, a first supporting layer in microfiber and a second finishing layer in polyurethane, the latter being obtained by spreading polyurethane on said first supporting layer. The present patent concerns also the process for obtaining the new material.

## Description

The present invention concerns the sector of stratified materials, and more specifically it concerns a new stratified material consisting of a microfiber supporting layer and a polyurethane layer spreaded thereon, intended to be used especially in the following sectors: shoe uppers, outdoor furnishings, automotive, motorbike and bike saddles.

The present invention concerns also the process for obtaining said stratified material.

Stratified materials are known, which are obtained by coupling two or more layers of identical or different materials.

An example of a stratified material is represented by the food wrapping sheets used in retail sale. These sheets are constituted by a sheet of paper with a polyethylene sheet coupled and joined to it.

The polyethylene sheet has a minimum thickness and prevents any contact between the food and the paper sheet, in addition to preventing the paper sheet from getting dirty and wet, and the ink from coming in contact with the food.

Coupled and/or stratified fabrics are known, which are obtained by joining two different fabrics with the aim to exploit the individual characteristics of each one of said fabrics.

For example, a first fabric is intended to be used on the inside of a clothing item and is suited to maintain a constant body temperature, while a second fabric is intended to be used on the outside of a clothing item and is suited to allow transpiration while at the same time guaranteeing impermeability.

Coupled materials are also known in which one of the layers can serve to strengthen the material itself and/or to add to its aesthetic value and/or to protect it from abrasion or wear, etc.

The subject of the present invention is a new stratified material consisting of a microfiber supporting layer and a polyurethane layer spreaded thereon, specifically intended to be used in the sector of shoe upper production, of outdoor furnishings, in the automotive sector and in the production of motorbike and bike saddles.

The present invention concerns also the process for obtaining said stratified material.

One of the objects of the invention is to provide a new stratified material featuring high mechanical resistance. More specifically, the new material features high resistance to abrasion, in addition to high tensile strength and tearing strength.

It is another object of the present invention to provide a new stratified material that heats up to a reduced extent following exposure to solar radiation.

Therefore, the new material can be specifically and effectively used to make or cover objects intended to be exposed to solar radiation, such as outdoor furnishings, accessories or parts of cars, motorbike and bike saddles.

These and other direct and complementary objects are achieved by the new stratified composite material comprising at least two layers, a first supporting layer in microfiber and a second finishing layer in polyurethane, obtained by spreading polyurethane on said first supporting layer.

Said material comprises also at least one black pigment, preferably and conveniently consisting of a black azoic dye in the preferred dry concentration of 4-8% in said supporting layer and at least one black organic pigment in the preferred dry concentration of 2-4% in said surface finishing layer.

Said black pigment has the property of reducing the heating of the material exposed to solar radiation.

Said supporting layer is made of polyamide microfiber, coagulated with polyurethane, in the preferred composition of 50% PA - 50% PU.

The material with which said supporting layer is made comprises said black azoic dye which is applied to the support through a water dyeing process.

Said supporting layer preferably has a thickness which varies from 0.3 mm to 2.1 mm.

Said second finishing layer is preferably constituted by a polyurethane matrix with the addition of a black organic pigment in dry concentration of 2-4%. The finishing layer is obtained and coupled with the first layer through a transfer process using release paper. The process includes the following steps:
1. preparing said first supporting layer;
2. preparing the polyurethane mixture with the addition of a black organic pigment through a mixing process;
3. spreading said mixture on release paper;
4. coupling the first supporting layer with said second finishing layer; the support is pressed by means of metallic cylinders and placed in contact with the reactive polyurethane arranged on the release paper, so that this contact produces the coupling between the two layers;
5. separating said finishing layer from the release paper.

The thickness of said finishing layer preferably ranges from 0.05 mm to 0.3 mm.

Black is used in the form of dye in said microfiber layer and in the form of pigment in said polyurethane finishing layer, and has high capacity of absorption of solar radiation in the visible spectrum, meaning from 400 to 700 nm. This makes the object appear as "black" to the human eye (a high percentage, exceeding 90%, of the radiation incident on the product is absorbed).

The reflection percentage, instead, increases when the value of 700 nm is exceeded, meaning that said black colour does not absorb radiation in the near infrared. These characteristics allow the material to stay black even if it heats up much less than a traditional black colour.

Solar radiation has a wide spectrum in terms of wavelength. The visible spectrum ranges from 400 to 700 nm. 900nm is infrared radiation. It is possible to measure the reflection spectrum of an object, meaning the reflection percentages at different wavelengths. An example of the above is provided here below:

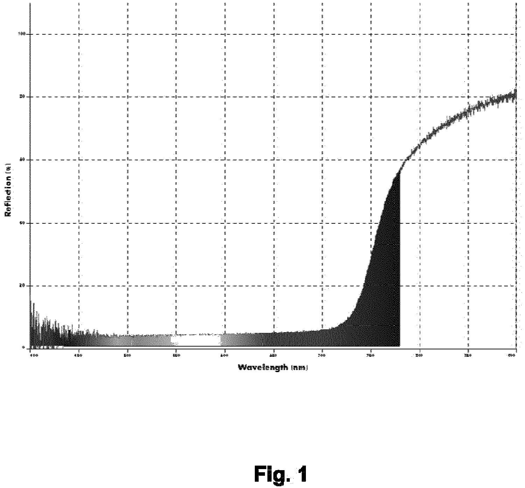

As can be seen in the diagram of Figure 1, in the visible spectrum reflection is low (black), while at 900nm reflection is equal to 80.97%.

These are the schematic outlines which are sufficient for a person skilled in the art to carry out the invention, consequently during the practical application of the invention changes may be made that do not affect the substance of the innovative concept disclosed herein.

Therefore, with reference to the preceding description, the following claims are expressed.

## Claims

1. Stratified composite material, specifically suited to be used to make shoe uppers, outdoor furnishings, objects for the automotive sector and saddles for motorbikes and bikes, **characterized in that** it comprises at least two layers, a first supporting layer in microfiber and a second finishing layer in polyurethane, the latter being obtained by spreading polyurethane on said first supporting layer.

2. Stratified composite material according to claim 1, **characterized in that** it comprises also at least one black azoic dye in said supporting layer and at least one black organic pigment in said surface finishing layer, and wherein said black organic pigment and said black azoic dye have a percentage of absorption of solar radiation in the visible spectrum exceeding 90%.

3. Stratified composite material according to claim 1, **characterized in that** said supporting layer is made of polyamide microfiber coagulated with polyurethane.

4. Stratified composite material according to claim 3, **characterized in that** said supporting layer is made of microfiber with composition consisting of 50% PA and 50% PU.

5. Stratified composite material according to claim 1, **characterized in that** said second finishing layer is constituted by polyurethane and is obtained by spreading polyurethane using release paper and coloured in black using said black pigment.

6. Stratified composite material according to any of the preceding claims, **characterized in that** the thickness of said supporting layer ranges from 0.3 mm to 2.1 mm and **in that** the thickness of said finishing layer preferably ranges from 0.05 mm to 0.3 mm.

7. Stratified composite material according to claim 2, **characterized in that** said at least one supporting layer comprises said black azoic dye in the dry concentration of 4-8%.

8. Stratified composite material according to claim 2, **characterized in that** said at least one finishing layer comprises said at least one black organic pigment in the preferred dry concentration of 2-4% in said surface finishing layer.

9. Process for obtaining a stratified material according to one or more of the preceding claims, **characterized in that** it comprises the following steps:
• preparing said first supporting layer;
• preparing a polyurethane mixture with the addition of a black organic pigment through a mixing process;
• spreading said mixture on release paper;
• coupling the first supporting layer with said second finishing layer;
• separating said finishing layer from the release paper.

10. Process according to the preceding claim, **characterized in that** said coupling step is performed by pressing said supporting layer after placing it in contact with a layer of said reactive polyurethane mixture arranged on said release paper, wherein said contact produces the coupling between the two layers.
